(19) Europäisches Patentamt / European Patent Office / Office européen des brevets

(11) **EP 4 129 652 A1**

(12) **EUROPEAN PATENT APPLICATION**
published in accordance with Art. 153(4) EPC

(43) Date of publication:
**08.02.2023 Bulletin 2023/06**

(21) Application number: **21775118.9**

(22) Date of filing: **24.03.2021**

(51) International Patent Classification (IPC):
**B32B 27/00** (1968.09)   **C09J 133/00** (1990.01)
**C09J 7/29** (2018.01)   **C09J 7/38** (2018.01)

(52) Cooperative Patent Classification (CPC):
**B32B 27/00; C09J 7/29; C09J 7/38; C09J 133/00**

(86) International application number:
**PCT/JP2021/012431**

(87) International publication number:
**WO 2021/193782 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.03.2020   JP 2020055205**

(71) Applicant: **Mitsubishi Chemical Corporation
Chiyoda-ku
Tokyo 100-8251 (JP)**

(72) Inventor: **SAKAI, Junichiro
Tokyo 100-8251 (JP)**

(74) Representative: **Kuhnen & Wacker
Patent- und Rechtsanwaltsbüro PartG mbB
Prinz-Ludwig-Straße 40A
85354 Freising (DE)**

(54) **ADHESIVE TAPE**

(57)   The present invention relates to an adhesive tape having a layer structure in which an adhesive layer, a first film layer (I), a base material layer, and a second film layer (II) are arranged in this order, in which the base material layer satisfies a predetermined requirement that a ratio (a)/(b) of a thickness (a) to a thickness (b) is not less than 1.7 or not more than 0.6 in which the thickness (a) is a thickness from the first film layer (I)-side of the base material layer to the outer surface of the adhesive layer and the thickness (b) is a thickness from the second film layer (II)-side surface of the base material layer to the outer surface of the second film layer (II), and at least one layer constituting the layer structure contains a flame retardant (C).

EP 4 129 652 A1

**Description**

TECHNICAL FIELD

The present invention relates to an adhesive tape, and more particularly to an adhesive tape suitable for an application for temporarily or permanently fixing an aircraft member, for example.

BACKGROUND ART

In the related art, adhesive tapes have been used for fixing members in various fields such as electric, electronic, OA equipment, home appliances, aircraft, ships, and vehicles.

In recent years, with breakthroughs in research and application of electronics, semiconductor and magnetic technology, high integration, miniaturization, and high performance of electric, electronic, and OA equipment are progressing, and the risk of catching fire due to a high temperature inside the equipment and heat storage is increasing. Due to the need to prevent such a risk, various parts in the equipment and adhesive members therefor are also required to have a high degree of flame retardancy.

In addition, in the fields such as aircraft and home appliances, various studies have been actively conducted on the flame retardancy of plastic materials, and adhesive materials used for fixing the plastic materials are naturally required to have high flame retardancy.

In the related art, a flame-retardant adhesive tape is imparted with flame retardancy by adding a flame retardant to an adhesive layer. For example, Patent Literature 1 and Patent Literature 2 disclose a flame-retardant adhesive tape in which a phosphorus-based flame retardant is added to an adhesive layer. In addition, Patent Literature 3 describes a double-sided adhesive tape having improved flame retardancy by changing the thickness of adhesive layers provided on both sides of a base material.

BACKGROUND ART LITERATURE

PATENT LITERATURE

Patent Literature 1: JP-A-H11-323269
Patent Literature 2: JP-A-2008-24827
Patent Literature 3: WO 2018/117264

SUMMARY OF INVENTION

TECHNICAL PROBLEM

In a single-sided adhesive tape in the related art, such as that in Patent Literature 1 or Patent Literature 2, even when the flame retardant is added to the adhesive layer, the flame retardancy is insufficient, and in order to further improve the flame retardancy, it is conceivable to increase the amount of the flame retardant added.

However, there is a problem that the adhesive performance is deteriorated when the amount of the flame retardant added is increased.

An object of the present invention is to provide an adhesive tape containing an adhesive layer on one side of the tape and a flame retardant, in which the flame retardancy is further improved without increasing the amount of the flame retardant added.

SOLUTION TO PROBLEM

As a result of intensive research in view of such circumstances, the inventors of the present invention have found that when a support having a multilayer structure, namely, a base material layer, which has not received much attention until now, is configured to fulfill a predetermined requirement, and the correlation of the thickness of layers in the multilayer structure is defined to a predetermined value, or the configuration of the multilayer structure is predetermined, the flame retardancy of the adhesive tape is improved.

Namely, an adhesive tape according to a first embodiment of the present invention is an adhesive tape including a layer structure in which an adhesive layer, a first film layer (I), a base material layer, and a second film layer (II) are arranged in this order, in which

the base material layer satisfies at least one of the following (X) and (Y), and

a ratio (a)/(b) of a thickness (a) to a thickness (b) is not less than 1.7 or not more than 0.6 in which the thickness (a) is a thickness from the first film layer (I)-side surface of the base material layer to the outer surface of the adhesive layer and the thickness (b) is a thickness from the second film layer (II)-side surface of the base material layer to the outer surface of the second film layer (II), and

at least one layer constituting the layer structure contains a flame retardant (C),

(X) the base material layer includes at least a first uniaxially oriented film and a second uniaxially oriented film, and the first uniaxially oriented film and the second uniaxially oriented film are arranged such that an angle of intersection between an orientation direction of the first uniaxially oriented film and an orientation direction of the second uniaxially oriented film is 45 degrees or more and 135 degrees or less, and

(Y) the base material layer includes at least a first flat yarn and a second flat yarn, and the first flat yarn and the second flat yarn are arranged such that an angle of intersection between the first flat yarn and the second flat yarn is 45 degrees or more and 135 degrees or less.

When the ratio (a)/(b) is not less than 1.7 or not more than 0.6, the adhesive tape tends to roll up in a specific direction at the time of being in contact with flames in comparison with an adhesive tape having the above ratio in another range, that is, the ratio (a)/(b) is more than 0.6 and less than 1.7. At this time, when the base material layer satisfies at least one of the above (X) and (Y), the base material layer shrinks not only in one direction but also in multiple directions when the temperature rises due to the contact with flames. With the configuration of the adhesive tape according to the first embodiment, catching fire of the adhesive tape can be prevented by moving of the adhesive tape to be away from a fire source before ignition of flame on the adhesive tape, and as a result, the flame retardancy can be further improved. The adhesive tape having a ratio (a)/(b) of more than 0.6 and less than 1.7 does not roll up at the time of being in contact with flames, and is closer to the fire source, making it easier to catch fire.

In the adhesive tape according to the first embodiment, it is preferable that the first film layer (I) has a thickness of 30 μm or more.

In the adhesive tape according to the first embodiment, it is preferable that the thickness of the first film layer (I) is larger than a thickness of the second film layer (II).

In the adhesive tape according to the first embodiment, it is preferable that the adhesive layer contains an adhesive composition containing an acrylic resin (A).

In the adhesive tape according to the first embodiment, it is preferable that the adhesive composition further contains a crosslinking agent (B).

In the adhesive tape according to the first embodiment, it is preferable that the adhesive layer contains the flame retardant (C), and in the adhesive layer, a content of the flame retardant (C) to 100 parts by weight of the acrylic resin (A) is 1 to 25 parts by weight.

It is preferable that the adhesive tape according to the first embodiment is used for fixing an aircraft member.

An adhesive tape according to a second embodiment of the present invention is an adhesive tape including an adhesive layer and a base material layer, in which

the base material layer satisfies at least one of the following (X) and (Y), and

at least one of the adhesive layer and the base material layer contains a flame retardant (C),

(X) the base material layer includes at least a first uniaxially oriented film and a second uniaxially oriented film, and the first uniaxially oriented film and the second uniaxially oriented film are arranged such that an angle of intersection between an orientation direction of the first uniaxially oriented film and an orientation direction of the second uniaxially oriented film is 45 degrees or more and 135 degrees or less, and

(Y) the base material layer includes at least a first flat yarn and a second flat yarn, and the first flat yarn and the second flat yarn are arranged such that an angle of intersection between the first flat yarn and the second flat yarn is 45 degrees or more and 135 degrees or less.

In the adhesive tape according to the second embodiment, it is preferable that there is no other layer between the adhesive layer and the base material layer and on a surface of the base material layer opposite to the adhesive layer. When the adhesive tape has the above configuration, the adhesive tape tends to roll up in a specific direction at the time of being in contact with flames. At this time, when the base material layer satisfies at least one of the above (X) and (Y), the base material layer shrinks not only in one direction but also in multiple directions when the temperature rises due to the contact with flames. With the configuration of the adhesive tape according to the second embodiment, the catching fire of the adhesive tape can be prevented by moving of the adhesive tape being away from a fire source before ignition of flame on the adhesive tape, and as a result, the flame retardancy can be improved.

An adhesive tape according to a third embodiment of the present invention is an adhesive tape including a layer structure in which an adhesive layer, a first film layer (I), and a base material layer are arranged in this order, in which

the base material layer satisfies at least one of the following (X) and (Y), and

at least one layer constituting the layer structure contains a flame retardant (C),

(X) the base material layer includes at least a first uniaxially oriented film and a second uniaxially oriented film, and the first uniaxially oriented film and the second uniaxially oriented film are arranged such that an angle of intersection between an orientation direction of the first uniaxially oriented film and an orientation direction of the second uniaxially oriented film is 45 degrees or more and 135 degrees or less, and

(Y) the base material layer includes at least a first flat yarn and a second flat yarn, and the first flat yarn and the second flat yarn are arranged such that an angle of intersection between the first flat yarn and the second flat yarn is 45 degrees or more and 135 degrees or less.

In the adhesive tape according to the third embodiment, it is preferable that there is no other layer on a surface of the base material layer opposite to the adhesive layer. When the adhesive tape has the above configuration, the adhesive tape tends to roll up in a specific direction at the time of being in contact with flames. At this time, when the base material layer satisfies at least one of the above (X) and (Y), the base material layer shrinks not only in one direction but also in multiple directions when the temperature rises due to the contact with flames. With the configuration of the adhesive tape according to the third embodiment, catching fire of the adhesive tape can be prevented by moving of the adhesive tape being away from a fire source before ignition of flame on the adhesive tape, and as a result, the flame retardancy can be improved.

An adhesive tape according to a fourth embodiment of the present invention is an adhesive tape having a layer structure in which an adhesive layer, a base material layer, and a second film layer (II) are arranged in this order, in which a ratio (a)/(b) of a thickness (a) to a thickness (b) is not less than 1.7 or not more than 0.6 in which the thickness (a) is a thickness from the an adhesive layer-side surface of the base material layer to the outer surface of the adhesive layer and the thickness (b) is a thickness from the second film layer (II)-side surface of the base material layer to the outer surface of the second film layer (II), the base material layer satisfies at least one of the following (X) and (Y), and at least one layer constituting the layer structure contains a flame retardant (C),

(X) the base material layer includes at least a first uniaxially oriented film and a second uniaxially oriented film, and the first uniaxially oriented film and the second uniaxially oriented film are arranged such that an angle of intersection between an orientation direction of the first uniaxially oriented film and an orientation direction of the second uniaxially oriented film is 45 degrees or more and 135 degrees or less, and

(Y) the base material layer includes at least a first flat yarn and a second flat yarn, and the first flat yarn and the second flat yarn are arranged such that an angle of intersection between the first flat yarn and the second flat yarn is 45 degrees or more and 135 degrees or less.

In the adhesive tape according to the fourth embodiment, it is preferable that there is no other layer between the base material layer and the adhesive layer. When the base material layer satisfies at least one of the above (X) and (Y), the base material layer shrinks not only in one direction but also in multiple directions when the temperature rises due to the contact with flames. At this time, when the ratio (a)/(b) of the thickness (a) to the thickness (b) is not less than 1.7 or not more than 0.6, in which the thickness (a) is the thickness from the adhesive layer-side surface of the base material layer to the outer surface of the adhesive layer and the thickness (b) is the thickness from the second film layer (II)-side surface of the base material layer to the outer surface of the second film layer (II), the flame retardancy of the adhesive tape is improved. Specifically, when the ratio (a)/(b) is not less than 1.7, with respect to the base material layer, the surface having the adhesive layer is less likely to shrink. Therefore, the adhesive tape shrinks in a round shape with the surface having the second film layer (II) on the inner side, by which the adhesive tape moves away from a fire source faster, catching fire is prevented, and the flame retardancy is improved. In addition, when the ratio (a)/(b) is not more than 0.6, with respect to the base material layer, the surface having the second film layer (II) is less likely to shrink. Therefore, the adhesive tape shrinks in a round shape with the surface having the adhesive layer on the inner side, by which the adhesive tape moves away from a fire source faster, catching fire is prevented, and the flame retardancy is improved.

EFFECTS OF INVENTION

According to the adhesive tape of the present invention, the flame retardancy can be further improved without increasing the amount of the flame retardant added as in comparison with the case in the related art. Therefore, the adhesive tape of the present invention is excellent in both flame retardancy and adhesiveness, and has a good balance therebetween, and can thus be used, for example, an application for temporarily or permanently fixing an aircraft member such as interior materials and furniture in an aircraft cabin. Specifically, the adhesive tape of the present invention can be suitably used in applications for permanently fixing a mirror or a guidance sign or applications for temporarily fixing a decorative panel or an overhead compartment in an aircraft cabin.

DESCRIPTION OF EMBODIMENTS

Hereinafter, although the present invention will be described in detail, the following description shows an example of a desirable embodiment, and the present invention is not limited to the contents of the following description.

In the present invention, "(meth)acrylic" means acrylic or methacrylic, "(meth)acryloyl" means acryloyl or methacryloyl, and "(meth)acrylate" means acrylate or methacrylate. In addition, "acrylic resin" is a resin obtained by polymerizing a polymerization component containing at least one (meth)acrylate-based monomer.

The numerical range specified by using "to" includes the numerical values at both ends (upper limit and lower limit) of "to". For example, "2 to 10" represents 2 or more and 10 or less.

When a concentration or amount is specified, any higher concentration or amount can be associated with any lower concentration or amount. For example, when there is a description of "2 to 10 % by weight" and "preferably 4 to 8 % by weight", the range of "2 to 8 % by weight" and "4 to 10 % by weight" is also included. In addition, in the present description, the weight-based ratio (a percentage or a part) is the same as the mass-based ratio (a percentage or a part).

(First Embodiment)

An adhesive tape according to the first embodiment of the present invention will be described in detail. The adhesive tape according to the first embodiment has a layer structure in which an adhesive layer and a support layer are arranged (laminated) in order, and the support layer has a layer structure in which a first film layer (I), a base material layer, and a second film layer (II) are arranged (laminated) in order from the adhesive layer side. Namely, the adhesive tape according to the first embodiment has a layer structure in which the adhesive layer, the first film layer (I), the base material layer, and the second film layer (II) are arranged (laminated) in this order. Each layer constituting the adhesive tape and each component contained in the adhesive tape according to the first embodiment will be described.

[Support Layer]

The support layer for use in the adhesive tape according to the first embodiment is a support layer having a multilayer structure, which has a layer structure in which the base material layer is provided in a middle portion, the first film layer (I) is arranged on one side thereof, and the second film layer (II) is arranged on the opposite side thereof.

The base material layer satisfies at least one of the following (X) and (Y).

(X) the base material layer includes at least a first uniaxially oriented film and a second uniaxially oriented film, and the first uniaxially oriented film and the second uniaxially oriented film are arranged such that an angle of intersection between an orientation direction of the first uniaxially oriented film and an orientation direction of the second uniaxially oriented film is 45 degrees or more and 135 degrees or less.

(Y) the base material layer includes at least a first flat yarn and a second flat yarn, and the first flat yarn and the second flat yarn are arranged such that an angle of intersection between the first flat yarn and the second flat yarn is 45 degrees or more and 135 degrees or less.

When the base material layer satisfies the above (X), the base material layer includes at least the first uniaxially oriented film and the second uniaxially oriented film. The uniaxially oriented film refers to a film oriented in a uniaxial direction, and examples thereof include a film oriented in a flow direction or a width direction of the film. The method of orienting the film in the uniaxial direction is not particularly limited, and examples thereof include a method of stretching an unstretched film in the uniaxial direction. By stretching in the uniaxial direction, a uniaxially oriented film having a stretching direction as an orientation direction can be obtained. As the uniaxially oriented film, for example, it is preferable to use a film stretched in the flow direction or the width direction. Examples of a method for confirming whether the film is oriented in the uniaxial direction include infrared dichroism measurement, a birefringence technique, second harmonic generation microscopy, and an X-ray diffraction method. Among them, the infrared dichroism measurement is preferably used as a relatively simple method.

When a degree of orientation measured by the infrared dichroism measurement is 0.01 or more, it can be determined that the film is oriented in the uniaxial direction. The degree of orientation of the uniaxially oriented film is more preferably 0.03 or more, and particularly preferably 0.05 or more.

The material of the uniaxially oriented film is not particularly limited, and an olefin-based resin such as polyethylene or polypropylene is preferred, polyethylene is more preferred, and low density polyethylene is particularly preferred.

The thickness of the uniaxially oriented film is preferably 10 $\mu$m to 150 $\mu$m, more preferably 15 $\mu$m to 100 $\mu$m,

and still more preferably 20 µm to 60 µm.

The material, the thickness, and the like of the first uniaxially oriented film and the second uniaxially oriented film may be the same as or different from each other as long as the effects of the present invention are not impaired.

When the base material layer satisfies the above (X), the first uniaxially oriented film and the second uniaxially oriented film are arranged such that an angle of intersection between an orientation direction of the first uniaxially oriented film and an orientation direction of the second uniaxially oriented film is 45 degrees or more and 135 degrees or less. The angle of intersection is preferably 60 degrees or more, and more preferably 75 degrees or more. In addition, the angle of intersection is preferably 120 degrees or less, and more preferably 105 degrees or less. It is considered that when the angle of intersection between the orientation direction of the first uniaxially oriented film and the orientation direction of the second uniaxially oriented film is within the above range, once the temperature rises when the adhesive tape is in contact with flames, a force that shrinks the uniaxially oriented film in the base material layer tends to act on the entire base material, so that the adhesive tape bends such that the adhesive tape moves away from a fire source, thereby preventing the catching fire of the adhesive tape and improving the flame retardancy. In addition, when the angle of intersection is within the above range, the base material layer tends to shrink not only in one direction but also in multiple directions when the temperature rises due to the contact with flames.

Examples of the configuration which can satisfy the above (X) include a configuration in which at least two uniaxially oriented films are bonded together. More specific examples include a configuration in which at least two uniaxially oriented films having different stretching directions are bonded together, or a configuration in which at least two uniaxially oriented films stretched in the same direction are bonded such that the stretching directions are different from each other.

The stretch ratio of such a stretched film is preferably 2 times or more, more preferably 3 times or more, further preferably 4 times or more, and particularly preferably 5 times or more.

In the configuration, the angle of intersection between the stretching directions (orientation directions) of the uniaxially oriented films is adjusted to be within the above range, so that a configuration satisfying the above (X) can be obtained. It is particularly preferable that the configuration satisfying the above (X) is a configuration in which a uniaxially oriented film stretched in the flow direction of the film and a uniaxially oriented film stretched in the width direction of the film are bonded together such that the angle of intersection between the stretching directions is 90 degrees.

Examples of a method for confirming whether the base material layer satisfies the above (X) in the adhesive tape include a method of taking out the film, confirming whether the film is oriented in the uniaxial direction by the above method, and determining the angle of intersection between the orientation directions by using birefringence measurement or the like.

In addition, when the base material layer satisfies the above (Y), the base material layer includes at least a first flat yarn and a second flat yarn. A flat yarn is a flat yarn made by cutting a film into strips. The flat yarn is preferably stretched in the flow direction in order to improve the strength.

When the base material layer satisfies the above (Y), the first flat yarn and the second flat yarn are arranged such that an angle of intersection between the first flat yarn and the second flat yarn is 45 degrees or more and 135 degrees or less.

In addition, when the base material layer satisfies the above (Y), it is preferable that the base material layer includes a first flat yarn group and a second flat yarn group, which are arranged such that an angle of intersection between the first flat yarn group and the second flat yarn group is 45 degrees or more and 135 degrees or less. Here, the first flat yarn group includes a first flat yarn and one or more flat yarns arranged approximately parallel to the first flat yarn. In addition, the second flat yarn group includes a second flat yarn and one or more flat yarns arranged approximately parallel to the second flat yarn.

The above angle of intersection is preferably 60 degrees or more, and more preferably 75 degrees or more. In addition, the angle of intersection is preferably 120 degrees or less, and more preferably 105 degrees or less. It is presumed that when the angle of intersection between the first flat yarn (first flat yarn group) and the second flat yarn (second flat yarn group) is within the above range, once the temperature rises when the adhesive tape is in contact with flames, a force that shrinks the flat yarn act on the entire base material, so that the adhesive tape bends such that the adhesive tape moves away from a fire source, thereby preventing the catching fire of the adhesive tape and improving the flame retardancy. In addition, when the angle of intersection is within the above range, the base material layer tends to shrink not only in one direction but also in multiple directions when the temperature rises due to the contact with flames.

Examples of the configuration that can satisfy the above (Y) include a configuration containing a flat yarn woven fabric. For example, by weaving at least two flat yarns or flat yarn groups such that the angle of intersection is within the above range to form a woven fabric, a configuration satisfying the above (Y) is obtained. The configuration satisfying the above (Y) is particularly preferably a woven fabric made by weaving at least two flat yarns or flat yarn groups in vertical and horizontal directions of the woven fabric such that the angle of intersection is 90 degrees.

When the base material layer contains such a woven fabric, it is preferable that the first flat yarn or the second flat yarn in the woven fabric is arranged parallel to the flow direction of the adhesive tape. In addition, the woven fabric is preferably one in which intersections of the flat yarns are fixed by heat fusion so as not to be misaligned. The flat yarn woven fabric has an advantage that the tensile strength in a longitudinal direction of the adhesive tape can be increased.

The material of the flat yarn is preferably an olefin-based resin such as polyethylene or polypropylene, more preferably polyethylene, and particularly preferably high density polyethylene.

The thickness of the flat yarn woven fabric is preferably from 10 $\mu$m to 150 $\mu$m, particularly preferably from 15 $\mu$m to 100 $\mu$m, and more preferably from 20 $\mu$m to 60 $\mu$m.

The material, the thickness, and the like, of the first flat yarn (first flat yarn group) and the second flat yarn (second flat yarn group) may be the same as or different from each other as long as the effects of the present invention are not impaired.

Examples of a method for confirming whether the base material layer satisfies the above (Y) in the adhesive tape include a method of observing with an optical microscope or the like and determining the angle of intersection of the flat yarns using image analysis or the like.

Compared to woven base materials such as a flat yarn woven fabric, a base material reinforced with unwoven fibers has much lower tensile strength. Therefore, in order to supplement the tensile strength, it is conceivable to improve the tensile strength by laminating a biaxially stretched polyester film or a biaxially stretched polypropylene film using a bonding agent. However, the adhesive tape using the base material obtained by this method is difficult to tear in the width direction, and the base material tends to be heavy because a bonding agent is required to bond the warp and the weft.

In contrast, a base material layer satisfying the above (Y) such as a flat yarn woven fabric is used, and a support layer whose both sides are laminated with the first film layer (I) and the second film layer (II) is used, whereby hand cutting property can be obtained. It is considered that this is because the fracture point is smoothly propagated and the linearity of the fracture surface is improved by laminating the flat yarn woven fabric with a film layer such as a plastic film.

In addition, by laminating, for example, a thin plastic film as the first film layer (I) or the second film layer (II) on the base material layer satisfying at least one of the above (X) and (Y) without using a bonding agent, the weight of the support layer can be reduced.

As the materials constituting the base material layer, the first film layer (I), and the second film layer (II), for example, olefin-based polymers such as high density polyethylene, linear low density polyethylene, polypropylene, and an ethylene-propylene block copolymers, polyesters such as polyethylene terephthalate and polybutylene terephthalate, polyamides such as nylon 6 and nylon 66, polyacrylic resins, and vinylidene chloride resins can be used. The materials constituting the base material layer, the first film layer (I), and the second film layer (II) may be different from each other, and the materials of any two or three layers may be the same as each other.

As a method of laminating the first film layer (I) and the second film layer (II) on the base material layer, extrusion lamination is preferred since the weight can be reduced without using a bonding agent.

Each of the first film layer (I) and the second film layer (II) may be either a single layer or a multilayer. The thickness of each of the first film layer (I) and the second film layer (II) is preferably, for example, from 10 $\mu$m to 150 $\mu$m, and more preferably from 20 $\mu$m to 100 $\mu$m.

As will be described in detail later, in the adhesive tape according to the first embodiment, a ratio (a)/(b) of a thickness (a) to a thickness (b) is not less than 1.7 or not more than 0.6 in which the thickness (a) is a thickness from the first film layer (I)-side-surface of the base material layer to the outer surface of the adhesive layer and the thickness (b) is a thickness from the second film layer (II)-side surface of the base material layer to the outer surface of the second film layer (II). At this time, it is preferable that the thickness (a) is larger than the thickness (b), that is, the ratio (a)/(b) is 1.7 or more in terms of a balance of the design of the adhesive tape. From such a viewpoint, it is preferable that the thickness of the first film layer (I) is larger than the thickness of the second film layer (II). Therefore, the thickness of the first film layer (I) is more preferably 30 $\mu$m or more, and particularly preferably 50 $\mu$m or more.

The thickness of the support layer having the first film layer (I), the base material layer, and the second film layer (II) thereon is preferably from 10 $\mu$m to 200 $\mu$m, more preferably from 50 $\mu$m to 170 $\mu$m, and still more preferably from 60 $\mu$m to 150 $\mu$m.

When the thickness is too small, the hand cutting property of the adhesive tape is improved, but defects such as wrinkles being mixed during the production of the adhesive tape tend to increase. When the thickness is too large, defects in the production of adhesive tape are reduced, but the cutting requires a larger force and tends to reduce the hand cutting property.

When the adhesive tape of the present invention is used as a double-sided adhesive tape for fixing an aircraft member, the weight per unit area of the adhesive tape is preferably 400 g/m$^2$ or less, and the support layer is also preferably lightweight. Specifically, the weight per unit area of the support layer is preferably 200 g/m$^2$ or less, and more preferably 100 g/m$^2$ or less. When the weight per unit area of the support layer is 200 g/m$^2$ or less, the flame retardancy tends to be good.

The lower limit of the weight per unit area of the support layer is preferably, for example, 10 g/m$^2$.

[Adhesive Layer]

The adhesive tape of the present invention has an adhesive layer on the first film layer (I)-side of the support layer.

The adhesive layer can be obtained by crosslinking (curing) an adhesive composition including various resins.

Examples of a resin to be a base of such an adhesive composition include an acrylic resin, natural rubber, synthetic rubber such as isoprene rubber, styrene-butadiene copolymer rubber (SBR), butadiene rubber, isobutylene-isoprene rubber, acrylic rubber, acrylonitrile-butadiene copolymer rubber, styrene-isoprene block copolymer rubber (SIS), styrene-butadiene block copolymer rubber (SBS), chloroprene rubber, and butyl rubber, and reclaimed rubber.

The adhesive composition preferably contains an acrylic resin (A) because it has excellent weather resistance, re-peelability, and heat resistance, and the adhesive properties can be adjusted relatively easily.

The acrylic resin (A) preferably contains at least an alkyl (meth)acrylate monomer (a1) unit. More preferably, the acrylic resin (A) mainly contains the alkyl (meth)acrylate monomer (a1) unit, further contains a monomer (a2) unit containing a functional group, and if necessary, contains another polymerizable monomer (a3) unit.

Examples of a method for obtaining the above acrylic resin (A) include polymerization of a polymerization component containing at least an alkyl (meth)acrylate monomer (a1). More preferable examples of such method include copolymerization of a polymerization component mainly containing the alkyl (meth)acrylate monomer (a1), further containing the monomer (a2) containing a functional group, and if necessary, containing another polymerizable monomer (a3).

In a monomer (alkyl (meth)acrylate monomer (a1)) for forming the alkyl (meth)acrylate monomer (a1) unit, the number of carbon atoms of the alkyl group is, for example, preferably from 1 to 20, more preferably from 1 to 12, still more preferably from 1 to 8, and particularly preferably from 4 to 8.

Specific examples of the alkyl (meth)acrylate monomer (a1) include methyl (meth)acrylate, ethyl (meth)acrylate, n-butyl (meth)acrylate, iso-butyl (meth)acrylate, tert-butyl (meth)acrylate, n-propyl (meth)acrylate, n-hexyl (meth)acrylate, 2-ethylhexyl (meth)acrylate, n-octyl (meth)acrylate, iso-octyl acrylate, isodecyl (meth)acrylate, lauryl (meth)acrylate, cetyl (meth)acrylate, stearyl (meth)acrylate, and isostearyl acrylate. These may be used alone or in combination of two or more thereof.

Among them, n-butyl (meth)acrylate and 2-ethylhexyl (meth)acrylate are preferred from the viewpoint of copolymerizability, adhesive properties, ease of handling, and ease of obtaining raw materials.

The content of the alkyl (meth)acrylate monomer (a1) unit in the acrylic resin (A) is preferably from 10 to 100 % by weight, more preferably from 50 to 95 % by weight, and still more preferably from 70 to 95 % by weight. When the content of the alkyl (meth)acrylate monomer (a1) unit is too small, the adhesive force of the adhesive layer tends to decrease.

Examples of a copolymerization monomer (monomer (a2) containing a functional group) for forming the monomer (a2) unit containing the functional group include a monomer containing a hydroxyl group, a monomer containing a carboxy group, a monomer containing an amino group, a monomer containing an acetoacetyl group, a monomer containing an isocyanate group, and a monomer containing a glycidyl group. Among them, as the monomer (a2) containing the functional group, the monomer containing a hydroxyl group and the monomer containing carboxy group are preferable from the viewpoint of an efficient cross-linking reaction.

Examples of the monomer containing a hydroxyl group include: hydroxyalkyl acrylates such as 2-hydroxyethyl (meth)acrylate, 4-hydroxybutyl (meth)acrylate, 5-hydroxypentyl (meth)acrylate, 6-hydroxyhexyl (meth)acrylate, and 8-hydroxyoctyl (meth)acrylate; caprolactone-modified monomers such as caprolactone-modified 2-hydroxyethyl (meth)acrylate; oxyalkylene-modified monomers such as diethylene glycol (meth)acrylate and polyethylene glycol (meth)acrylate; monomers containing a primary hydroxyl group such as 2-acryloyloxyethyl-2-hydroxyethylphthalic acid; monomers containing a secondary hydroxyl group such as 2-hydroxypropyl (meth)acrylate, 2-hydroxybutyl (meth)acrylate, 3-chloro-2-hydroxypropyl (meth)acrylate; and monomers containing a tertiary hydroxyl group such as 2,2-dimethyl 2-hydroxyethyl (meth)acrylate.

Among them, the monomer containing a hydroxyl group is particularly preferably 2-hydroxyethyl (meth)acrylate or 4-hydroxybutyl (meth)acrylate from the viewpoint of excellent reactivity with a crosslinking agent (B). By using the monomer containing a hydroxyl group as the copolymerization monomer, the acrylic resin (A) can be made into an acrylic resin including a monomer unit containing a hydroxyl group.

Examples of the monomer containing a carboxy group include (meth)acrylic acid, acrylic acid dimer, crotonic acid, maleic acid, maleic anhydride, fumaric acid, citraconic acid, glutaconic acid, itaconic acid, acrylamide N-glycolic acid, and cinnamic acid. Among them, the monomer containing a carboxy group is preferably (meth)acrylic acid. By using the monomer containing a carboxy group as the copolymerization monomer, the acrylic resin (A) can be made into an acrylic resin including a monomer unit containing a carboxy group.

Examples of the monomer containing an amino group include tert-butylaminoethyl (meth)acrylate, ethylaminoethyl (meth)acrylate, dimethylaminoethyl (meth)acrylate, and diethylaminoethyl (meth)acrylate.

Examples of the monomer containing an acetoacetyl group include 2-(acetoacetoxy)ethyl (meth)acrylate, and allyl acetoacetate.

Examples of the monomer containing an isocyanate group include 2-acryloyloxyethyl isocyanate, 2-methacryloyloxyethyl isocyanate and an alkylene oxide adduct thereof.

Examples of the monomer containing a glycidyl group include glycidyl (meth)acrylate, and allyl glycidyl (meth)acrylate.

The monomer (a2) containing a functional group may be used alone or in combination of two or more thereof.

The content of the monomer (a2) unit containing a functional group in the acrylic resin (A) is preferably from 0.01 to 30 % by weight, more preferably from 0.05 to 10 % by weight, still more preferably from 0.1 to 10 % by weight, and particularly preferably from 2 to 5 % by weight. When the content of the monomer (a2) unit containing a functional group is too small, the durability tends to decrease due to a decrease in cohesive force. In addition, when the content of the monomer (a2) unit containing a functional group is too large, the viscosity tends to increase and the stability of the resin tends to decrease.

Examples of a copolymerization monomer (another polymerizable monomer (a3)) for forming the another polymerizable monomer (a3) unit include: (meth)acrylate-based compounds containing an alicyclic structure such as cyclohexyl (meth)acrylate and isobornyl (meth)acrylate; monomers having one aromatic ring such as phenyl (meth)acrylate, benzyl (meth)acrylate, phenoxyethyl (meth)acrylate, phenyldiethylene glycol (meth)acrylate, 2-hydroxy-3-phenoxypropyl (meth)acrylate, styrene, and α-methylstyrene; (meth)acrylate ester-based monomers containing a biphenyloxy structure such as biphenyloxyethyl (meth)acrylate; (meth)acrylamide-based monomers such as ethoxymethyl (meth)acrylamide, n-butoxymethyl (meth)acrylamide, (meth)acryloylmorpholine, dimethyl (meth)acrylamide, diethyl (meth)acrylamide, and (meth)acrylamide N-methylol (meth)acrylamide; monomers containing an alkoxy group or an oxyalkylene group such as 2-methoxyethyl (meth)acrylate, 2-ethoxyethyl (meth)acrylate, methoxydiethylene glycol (meth)acrylate, ethoxydiethylene glycol (meth)acrylate, methoxypolyethylene glycol (meth)acrylate, polypropylene glycol mono(meth)acrylate; and acrylonitrile, methacrylonitrile, vinyl acetate, vinyl propionate, vinyl stearate, vinyl chloride, vinylidene chloride, alkyl vinyl ether, vinyl toluene, vinyl pyridine, vinyl pyrrolidone, itaconic acid dialkyl ester, fumaric acid dialkyl ester, allyl alcohol, acrylic chloride, methyl vinyl ketone, allyltrimethylammonium chloride, and dimethylallyl vinyl ketone.

Among them, the another polymerizable monomer (a3) is preferably the (meth)acrylate-based compound containing an alicyclic structure from the viewpoint of excellent adhesive force to a low-polarity adherend.

The content of the another polymerizable monomer (a3) unit in the acrylic resin (A) is preferably 40 % by weight or less, more preferably 30 % by weight or less, and still more preferably 25 % by weight or less. When the another polymerizable monomer (a3) unit is too much, it tends to be difficult to obtain the desired adhesive properties.

For example, the acrylic resin (A) can be produced by copolymerizing the above alkyl (meth)acrylate monomer (a1), if necessary, the monomer (a2) containing a functional group, and the another polymerizable monomer (a3) as polymerization components. From the viewpoint that the acrylic resin (A) can be safely and stably produced with any monomer composition, it is preferable to produce the acrylic resin (A) by solution polymerization in such copolymerization.

In solution polymerization, for example, monomer components such as the alkyl (meth)acrylate monomer (a1), the monomer (a2) containing a functional group and the another polymerizable monomer (a3), and a polymerization initiator are mixed or dropped in an organic solvent, and polymerization is carried out, for example, in a reflux state or at 50 to 98°C for 0.1 to 20 hours. The acrylic resin (A) obtained by the above polymerization method is an organic solvent-based acrylic resin.

Examples of the polymerization initiator include azo-based polymerization initiators such as azobisisobutyronitrile and azobisdimethylvaleronitrile, and peroxide-based polymerization initiators such as benzoyl peroxide, lauroyl peroxide, di-tert-butyl peroxide, and cumene hydroperoxide, which are general radical polymerization initiators.

The weight average molecular weight of the acrylic resin (A) is, for example, preferably from 100,000 to 5,000,000, more preferably from 300,000 to 1,500,000, and still more preferably from 500,000 to 900,000. When the weight average molecular weight is too small, the durability tends to decrease, and when the weight average molecular weight is too large, production tends to be difficult.

The dispersity (weight average molecular weight/number average molecular weight) of the acrylic resin (A) is preferably 20 or less, more preferably 15 or less, still more preferably 10 or less, and particularly preferably 7 or less. When the dispersity is too high, the durability of the adhesive layer decreases, and foaming or the like tends to occur easily. The lower limit of the dispersity is preferably 1.1 or more, for example, from the viewpoint of the production limit.

The glass transition temperature of the acrylic resin (A) is preferably, for example, from -80°C to 10°C, more preferably from -70°C to -10°C, and still more preferably from -65°C to -20°C. When the glass transition temperature is too high, the tackiness tends to be insufficient, and when the glass transition temperature is too low, the heat resistance tends to decrease.

The above weight average molecular weight is a weight average molecular weight in terms of standard polystyrene molecular weight, and can be measured by using three columns in series: Shodex GPC KF-806L (exclusion limit molecular weight: $2 \times 10^7$, separation range: 100 to $2 \times 10^7$, theoretical plate number: 10,000 per column, filler material: styrene-divinylbenzene copolymer, filler particle diameter: 10 μm) in high performance liquid chromatography ("Waters 2695 (main body)" and "Waters 2414 (detector)" manufactured by Nihon Waters K.K.).

The number average molecular weight can also be measured by using the same method. The dispersity is obtained based on the weight average molecular weight and the number average molecular weight. The glass transition temperature is calculated according to the following Fox equation.

The glass transition temperature of a homopolymer obtained by using the monomer constituting the acrylic resin (A) can usually be measured by a differential scanning calorimeter (DSC), and catalog values may be used.

$$\frac{1}{Tg} = \frac{Wa}{Tga} + \frac{Wb}{Tgb} + \cdots + \frac{Wn}{Tgn}$$

Tg: glass transition temperature (K) of copolymer
Tga: glass transition temperature (K) of homopolymer of monomer A
Wa: weight fraction of monomer A
Tgb: glass transition temperature (K) of homopolymer of monomer B
Wb: weight fraction of monomer B
Tgn: glass transition temperature (K) of homopolymer of monomer N
Wn: weight fraction of monomer N

$$(Wa + Wb + \cdots + Wn = 1)$$

[Crosslinking Agent (B)]

The adhesive composition preferably further contains a crosslinking agent (B). The adhesive composition is preferably crosslinked by the crosslinking agent (B) and cured to form an adhesive layer.

Examples of the crosslinking agent (B) include an isocyanate-based crosslinking agent, a metal chelate-based crosslinking agent, an epoxy-based crosslinking agent, a metal salt-based crosslinking agent, a metal alkoxide-based crosslinking agent, an aldehyde-based crosslinking agent, a non-amino resin amine crosslinking agent, a urea-based crosslinking agent, a melamine-based crosslinking agent, and an aziridine-based crosslinking agent. The crosslinking agent (B) is preferably a metal chelate-based crosslinking agent.

The content of the crosslinking agent (B) is preferably from 0.01 to 10 parts by weight, and more preferably from 0.01 to 5 parts by weight, with respect to 100 parts by weight of the acrylic resin (A). When the content is too small, the cohesive force tends to decrease and the material tends to be vulnerable to shearing. In addition, when the content of the crosslinking agent (B) is too large, the crosslinking reaction is excessive and the adhesive force tends to decrease.

Particularly, when the crosslinking agent (B) is a metal chelate-based crosslinking agent, the content is preferably from 0.01 to 5 parts by weight, and more preferably from 0.1 to 1 parts by weight, with respect to 100 parts by weight of the acrylic resin (A).

In addition, when the crosslinking agent (B) is an epoxy-based crosslinking agent, the content is preferably from 0.01 to 1 parts by weight, and more preferably from 0.01 to 0.5 parts by weight, with respect to 100 parts by weight of the acrylic resin (A).

[Flame Retardant (C)]

In the adhesive tape according to the first embodiment, at least one layer constituting the layer structure contains a flame retardant (C). The layer containing the flame retardant (C) is not particularly limited as long as it is one or more of the adhesive layer, the first film layer (I), the base material layer, and the second film layer (II) which are described above. It is preferable that the adhesive layer contains the flame retardant (C) from the viewpoint of maintaining the tensile strength of the adhesive tape. Hereinafter, although a preferred embodiment of the flame retardant (C) will be described by taking the case where the adhesive layer contains the flame retardant (C) as an example, the flame retardant (C) is not limited to the following. For example, when a layer other than the adhesive layer contains the flame retardant (C), the flame retardant (C) may have a different form depending on the material and the like of the layer.

Namely, it is preferable that in the adhesive tape according to the first embodiment, the adhesive layer (adhesive composition) contains the flame retardant (C).

As the flame retardant (C), a known flame retardant can be used, and a flame retardant generally used as a flame retardant for an adhesive can be used. Examples thereof include a phosphorus-based flame retardant, a metal hydroxyl group-based flame retardant, a metal salts of phosphinates type flame retardant, a halogen-based flame retardant, combined use of a halogen-based flame retardant and antimony trioxide, a nitrogen-containing compound such as melamine cyanurate and triazine compound, and sodium polyphosphate.

Examples of the phosphorus-based flame retardant include non-halogen phosphate esters such as trimethyl phosphate, triethyl phosphate, triphenyl phosphate, tricresyl phosphate, trixylenyl phosphate, cresyl diphenyl phosphate, 2-naphthyldiphenyl phosphate, and cresyl di-2,6-xylenyl phosphate; aromatic condensed phosphate esters such as products with trade names "CR-733S", "CR-741", and "PX-200" manufactured by DAIHACHI CHEMICAL INDUSTRY CO., LTD.; non-halogen condensed phosphate esters such as products with trade names "DAIGUARD-580", "DAIGUARD-610", and "DAIGUARD-880" manufactured by DAIHACHI CHEMICAL INDUSTRY CO., LTD.; amine phosphate salts such as melamine polyphosphate; and ammonium polyphosphate not coated with resin or coated with melamine.

Among them, ammonium polyphosphate is preferred as a phosphorus-based flame retardant since it does not contain halogen but has a high phosphorus concentration and thus has high flame retardancy, and by addition in a small amount, it can impart flame retardancy without deteriorating the adhesive properties. Further, ammonium polyphosphate coated with melamine or the like is particularly preferred in that it prevents hydrolysis and has excellent moisture and heat resistance.

Examples of the metal hydroxyl group-based flame retardant include magnesium hydroxide and aluminum hydroxide.

Examples of the metal salts of phosphinates type flame retardant include products with trade names "Exolit OP1230" and "Exolit OP930" manufactured by Clariant.

Examples of the halogen-based flame retardant include bromine-based flame retardants such as tetrabromobisphenol A, hexabromocyclodecane, dibromodiphenyl oxide, a tetrabromobisphenol A polycarbonate oligomer, brominated polystyrene, and ethylenebistetrabromophthalimide; chlorine-based flame retardants such as chlorinated paraffin and perchlorocyclopentadecane; halogen-containing phosphate esters such as tris(tribromoneopentyl) phosphate and tris(chloropropyl) phosphate; and halogen-containing condensed phosphate esters such as products with trade names "CR-504L", "CR-570", and "DAIGUARD-540" manufactured by DAIHACHI CHEMICAL INDUSTRY CO., LTD.

Among them, a halogen-containing flame retardant can generate toxic halogen gases during combustion and can corrode metals. Therefore, the flame retardant (C) is preferably a flame retardant which does not contain halogen.

Further, a synergistic effect can be obtained by using flame retardants having different mechanisms of action in combination, for example, by using a compound product (composite, composite material) in comparison with using the flame retardant (C) alone. However, in the present invention, it is preferable to use the flame retardant (C) alone from the viewpoint that the adhesive force or the compatibility with an adhesive are not reduced.

The flame retardant (C) is particularly preferably the phosphorus-based flame retardant exemplified above, and particularly preferably ammonium polyphosphate coated with melamine or the like since the deterioration in adhesive properties is little and excellent flame retardancy can be obtained, and hydrolysis is prevented and the moisture and heat resistance is excellent.

The content of the flame retardant (C) in the adhesive layer is preferably from 1 to 25 parts by weight, more preferably from 1.5 to 20 parts by weight, still more preferably from 2 to 15 parts by weight, and particularly preferably from 3 to 8 parts by weight, with respect to 100 parts by weight of the acrylic resin (A).

When the content of the flame retardant (C) is too much, the adhesive properties of the adhesive tape tend to decrease or the weight of the tape tends to increase.

The content of the flame retardant with respect to the whole adhesive tape is from 0.5 to 5 parts by weight, more preferably from 1 to 4 parts by weight, and particularly preferably from 1.5 to 3 parts by weight, with respect to 100 parts by weight of the adhesive tape. When the content of the flame retardant is too much, the adhesive properties of the adhesive tape tend to decrease or the weight of the tape tends to increase. When the content is too small, the flame retardancy tends to decrease.

In addition to a base resin such as the acrylic resin (A), the crosslinking agent (B), and the flame retardant (C), the adhesive layer may appropriately contain a tackifier, an ultraviolet absorber, an antioxidant, a plasticizer, a pigment, a stabilizer, or a filler.

Examples of the tackifier include a rosin-based resin, a terpene-based resin, a xylene-based resin, a phenol-based resin, a coumarone-based resin, and a petroleum-based resin.

When the base resin is the acrylic resin (A), the tackifier is preferably a rosin-based resin, a terpene-based resin, and a xylene-based resin. When the base resin is a rubber-based resin, the tackifier is preferably a rosin-based resin, a terpene-based resin, and a petroleum-based resin.

As described above, an adhesive containing the organic solvent-based acrylic resin is an organic solvent-based adhesive.

[Ratio (a)/(b)]

In the adhesive tape according to the first embodiment, a ratio (a)/(b) of a thickness (a) from the first film layer (I)-side surface of the base material layer to the outer surface of the adhesive layer to a thickness (b) from the second film layer (II)-side surface of the base material layer to the outer surface of the second film layer (II) is not less than 1.7 or not more than 0.6.

When the above ratio (a)/(b) is within this range, the tape tends to roll up in a specific direction at the time of being in contact with flames, and the adhesive tape moves away from the fire source before ignition of flame on the adhesive tape, thereby preventing the catching fire of the adhesive tape, in comparison with an adhesive tape having the above ratio (a)/(b) of more than 0.6 and less than 1.7. At this time, when the base material layer satisfies at least one of the above (X) and (Y), the base material layer shrinks not only in one direction but also in multiple directions when the temperature rises due to the contact with flames.

Namely, when a difference between the thickness (b) from the surface of the base material layer on the second film layer (II)-side to the outer surface of the second film layer (II) and the thickness (a) from the surface of the base material layer on the first film layer (I)-side to the outer surface of the adhesive layer is large and the ratio is not less than 1.7 or not more than 0.6, when the base material layer tries to shrink in multiple directions, there is a difference that, of the thickness (a) and the thickness (b), a thick side is difficult to shrink and a thin side is easy to shrink, which makes the adhesive tape easy to shrink in a round shape. Accordingly, the adhesive tape moves away from the fire source faster, catching fire is prevented, and the flame retardancy is improved.

Therefore, the adhesive tape according to the first embodiment has an effect of being well-balanced in both flame retardancy and adhesiveness.

The "outer" in the "outer surface" means the side of the second film layer (II) or the adhesive layer opposite to the base material layer side. Further, the "surface" is not always exposed, and when it is in contact with another layer, it means the interface. For example, when a release liner attached to an adhesive layer is bonded onto a base material, the interface with the release liner may be the surface of the adhesive layer.

In the adhesive tape according to the first embodiment, the first film layer (I) and the second film layer (II) may each have a multilayer structure, or a layer other than a plastic film may be interposed between the first film layer (I) and the base material layer, or between the second film layer (II) and the base material layer. When another layer is present, the thickness (a) or the thickness (b) is the thickness obtained by adding the thickness of the another layer. For example, if there is a bonding agent layer between the base material layer and the first film layer (I), the thickness (a) is the total thickness of the first film layer, the adhesive layer, and the bonding agent layer. If the second film layer (II) is a laminated film including two film layers and there is a bonding agent layer between the two film layers, the thickness (b) is the total thickness of the two film layers and the bonding agent layer.

When the above ratio (a)/(b) is 1.7 or more, the ratio (a)/(b) is preferably 2.0 or more, more preferably 2.5 or more, and still more preferably 3.0 or more. In addition, when the above ratio (a)/(b) is 0.6 or less, the ratio (a)/(b) is preferably 0.55 or less, more preferably 0.50 or less, and still more preferably 0.40 or less.

For the above ratio (a)/(b), the upper limit is preferably 5.85, and the lower limit is preferably 0.30.

Further, it is preferable that the thickness (a) is larger than the thickness (b) in terms of the balance of the design of the adhesive tape.

The thickness of the adhesive layer is preferably from 20 to 150 $\mu$m, more preferably from 30 to 130 $\mu$m, still more preferably from 40 to 120 $\mu$m, and particularly preferably from 45 to 115 $\mu$m, from the viewpoint of giving a sufficient adhesive force to an adherend.

From the viewpoint of giving a sufficient adhesive force to an adherend, the adhesive force of the adhesive layer is preferably from 10 to 200 N/25 mm, more preferably from 15 to 150 N/25 mm, and still more preferably from 20 to 120 N/25 mm, when a test plate of SUS-BA plate (bright annealing-treated stainless steel plate) which has been heatdried at 175°C for 1 hour is used as an adherend.

For example, when Carpet (for AIRCRAFT, material: wool/polyamide, manufactured by Lantal Textiles AG) is used as the adherend, the adhesive force of the adhesive layer is preferably from 3 to 100 N/25 mm, more preferably from 4 to 75 N/25 mm, and still more preferably from 5 to 50 N/25 mm.

The adhesive force is not limited to the above adhesive force range because it varies depending on the composition (material), surface condition (surface roughness), treatment (cleaning) conditions, *etc.* of the adherend.

When the adhesive force is higher than the above range, the thickness of the adhesive layer tends to increase, and the tape weight tends to be heavier. When the adhesive force is lower than the above range, a sufficient adhesive force cannot be obtained and the fixed member tends to fall off easily.

In the present description, the adhesive force is a value measured according to JIS Z0237.

[Adhesive Tape]

When the adhesive tape according to the first embodiment has, in addition to excellent flame retardancy, strong adhesiveness over the medium to long term including the initial stage, the adhesive tape can be used, for example, an application for permanently fixing a mirror, a carpet, and the like in an aircraft cabin. In addition, when the adhesive tape according to the first embodiment has, in addition to excellent flame retardancy, both appropriate adhesiveness and re-peelability, the adhesive tape can be used for various applications such as temporary fixing of a decorative panel or overhead compartment in an aircraft cabin, for example. In this way, the adhesive tape according to the first embodiment is suitably used for fixing an aircraft member.

In the adhesive tape according to the first embodiment, the total weight per unit area of the support layer and the adhesive layer is preferably $400 \text{ g/m}^2$ or less, more preferably $300 \text{ g/m}^2$ or less, still more preferably $250 \text{ g/m}^2$ or less, and particularly preferably $225 \text{ g/m}^2$ or less.

The lower limit of the weight is preferably, for example, $50 \text{ g/m}^2$.

The thickness of the adhesive tape according to the first embodiment is preferably from 15 to 400 $\mu$m, more preferably from 30 to 300 $\mu$m, and still more preferably from 40 to 250 $\mu$m.

When the thickness is too large, it tends to exceed a weight range suitable for use in an aircraft, and when the thickness is too small, it tends to be difficult to obtain sufficient flame retardancy and adhesiveness.

In the adhesive tape according to the first embodiment, the ratio of the thickness of the adhesive layer to the thickness of the support layer (adhesive layer/support layer) is preferably from 0.1 to 50, more preferably from 0.2 to 25, and still more preferably from 0.4 to 15.

When this ratio is too small, the adhesive layer is too thin for the support layer, so that a sufficient adhesive force tends to be difficult to obtain. When this ratio is too large, the adhesive layer is too thick with respect to the support layer, so that inconveniences such as foaming of the adhesive layer tend to occur during the production of the adhesive tape, or the cost tends to increase.

[Method for Producing Adhesive Tape]

As for a method for producing the adhesive tape according to the first embodiment, a known general method for producing an adhesive tape can be used. For example, the adhesive tape can be produced by a method in which an adhesive composition is applied and dried on one surface of a support layer and a release liner is superposed on the surface of the formed adhesive layer, or a method in which an adhesive composition is applied and dried on one surface of a release liner and a support layer is superposed on the surface of the formed adhesive layer.

When the adhesive layer is provided on the support layer, a surface of the support layer may be appropriately subjected to known surface treatment, for example, physical treatments such as a corona discharge treatment and a plasma treatment, and chemical treatments such as an undercoat treatment.

Examples of the release liner include plastic films made of polyolefin resins such as polyethylene, polyester resins such as polyethylene terephthalate, vinyl acetate resins, polyimide resins, fluororesins, and plastics such as cellophane; paper such as kraft paper and Japanese paper; rubber sheets made of natural rubber or butyl rubber; foam sheets made by foaming polyurethane or polychloroprene rubber; metal foils such as an aluminum foil and a copper foil; and composites of the above. Further, these release liners may be subjected to a surface treatment such as a corona treatment on one side or both sides thereof.

In addition, examples of the release liner include those obtained by coating, with fluororesin or silicone resin as a release agent, pure paper, Glassine paper, kraft paper, claycoated paper laminated with a polyethylene film or the like, paper coated with a resin such as polyvinyl alcohol or acrylate ester copolymer, and synthetic resin films such as polyester or polypropylene.

Among them, a paper release liner is preferred, and a paper release liner having a basis weight of from 40 to 120 $\text{g/m}^2$ is particularly preferred, from the viewpoint of being capable of being easily torn by hand. Here, the basis weight is preferably from 50 to 80 $\text{g/m}^2$. Further, the thickness of the release liner is preferably from 40 to 180 $\mu$m, more preferably from 60 to 140 $\mu$m, and still more preferably from 80 to 120 $\mu$m. When the thickness is too small, wrinkles tend to occur during winding and production tends to be difficult. When the thickness is too large, the hand cutting property tends to decrease.

As a coating device used when various sheet-shaped base materials are coated with the adhesive composition forming the adhesive, a generally used coating device can be used. Examples of the coating device include a roll knife coater, a die coater, a roll coater, a bar coater, a gravure roll coater, a reverse roll coater, dipping, and blade coater.

The drying conditions after the adhesive composition is applied may be any conditions as long as the solvent and residual monomers in the adhesive composition are dried and removed during drying. When the crosslinking agent (B) is used, in addition to the above, the conditions may be such that the functional group of the base resin and the crosslinking agent (B) can react with each other to form a crosslinked structure. The specific drying conditions are, for example, preferably from 60 to 120°C for 1 to 20 minutes. After drying, the adhesive layer can be aged in a state of being covered with a sheet-shaped base material, and the crosslinking reaction can be further promoted. The aging is preferably carried out at, for example, 30 to 50°C for 96 hours to 7 days.

The adhesive tape according to the first embodiment may be in a roll state, a sheet state, or may be further processed into various shapes.

The adhesive tape according to the first embodiment preferably has large tensile strength. Specifically, for example, at the time of being bonded to a floor or wall, the adhesive tape must have strength enough not to be torn when the adhesive tape is pulled without being distorted; peeled off for reapplying; or pulled to be peeled off after use.

The tensile strength of the adhesive tape is preferably 20 N/25 mm or more, more preferably 30 N/25 mm or more, and still more preferably 50 N/25 mm or more. The upper limit of the tensile strength is preferably 250 N/25 mm, for example.

As described above, the adhesive tape of the present invention is preferably used for fixing an aircraft member. Examples of the aircraft member include interior materials or furniture in an aircraft cabin, and specific examples include a carpet, a floor material, a decorative panel, a resin part, a resin sheet, and a resin coating.

The aircraft member is particularly preferably a carpet, a floor material, a decorative panel, and a resin part.

Examples of the carpet include a publicly known general carpet used in an aircraft cabin, and specific examples include a carpet using a nylon fiber and an olefin fiber.

Examples of the floor material include metal alloys such as an aluminum alloy and a titanium alloy, composite materials of a glass reinforced fiber and an epoxy resin, and floor materials using composite materials of a glass reinforced fiber and a phenol resin.

Examples of the decorative panel include those obtained by laminating a polyvinyl fluoride film, a polytetrafluoroethylene film, a melamine resin film, or the like on an aluminum alloy plate.

Examples of the resin part include parts made by molding aromatic polyamide, polycarbonate, an acrylonitrile-butadiene-styrene resin, or polyphenylsulfone into a desired shape.

Examples of the resin sheet include publicly known general resin sheets used in an aircraft, and specific examples include a resin sheet made of polyvinylidene fluoride.

Examples of the resin coating film include publicly known general resin coating film used in aircraft, and specific examples include a resin coating film made of an acrylicstyrene resin, polycarbonate, fluororesin, and polyurethane.

The combination of aircraft members bonded using the adhesive tape according to the first embodiment is not particularly limited. For example, a carpet, a floor material, a decorative panel, a resin part, a resin sheet, or a resin coating film can be appropriately combined and bonded.

(Second Embodiment)

An adhesive tape according to a second embodiment of the present invention will be described. The adhesive tape according to the second embodiment is an adhesive tape including an adhesive layer and a base material layer, in which the base material layer satisfies at least one of the following (X) and (Y), and at least one of the adhesive layer and the base material layer contains a flame retardant (C).

(X) the base material layer includes at least a first uniaxially oriented film and a second uniaxially oriented film, and the first uniaxially oriented film and the second uniaxially oriented film are arranged such that an angle of intersection between an orientation direction of the first uniaxially oriented film and an orientation direction of the second uniaxially oriented film is 45 degrees or more and 135 degrees or less.

(Y) the base material layer includes at least a first flat yarn and a second flat yarn, and the first flat yarn and the second flat yarn are arranged such that an angle of intersection between the first flat yarn and the second flat yarn is 45 degrees or more and 135 degrees or less.

In the adhesive tape according to the second embodiment, it is preferable that there is no other layer between the adhesive layer and the base material layer and on a surface of the base material layer opposite to the adhesive layer. In the adhesive tape according to the second embodiment, when the base material layer satisfies at least one of the above (X) and (Y), the base material layer shrinks not only in one direction but also in multiple directions when the temperature rises due to contact with flames. At this time, since the surface having the adhesive layer is less likely to shrink, the adhesive tape shrinks in a round shape where the surface which does not have the adhesive layer is on the inner side, whereby the adhesive tape moves away from a fire source faster, catching fire is prevented, and the flame retardancy is improved.

As the base material layer and the adhesive layer used in the second embodiment of the present invention, the base material layer and the adhesive layer which are same as those described in the first embodiment are used, and preferred embodiments thereof are also the same. In addition, in the adhesive tape according to the second embodiment, preferred configurations, production methods, or applications other than those described above are the same as the preferred configurations, production methods, or applications of the adhesive tape according to the first embodiment. In the second embodiment, the base material layer corresponds to the above support layer.

(Third Embodiment)

An adhesive tape according to a third embodiment of the present invention will be described. The adhesive tape according to the third embodiment is an adhesive tape having a layer structure in which an adhesive layer, a first film layer (I), and a base material layer are arranged in this order, in which the base material layer satisfies at least one of the following (X) and (Y), and at least one layer constituting the layer structure contains a flame retardant (C).

(X) the base material layer includes at least a first uniaxially oriented film and a second uniaxially oriented film, and the first uniaxially oriented film and the second uniaxially oriented film are arranged such that an angle of intersection between an orientation direction of the first uniaxially oriented film and an orientation direction of the second uniaxially oriented film is 45 degrees or more and 135 degrees or less.

(Y) the base material layer includes at least a first flat yarn and a second flat yarn, and the first flat yarn and the second flat yarn are arranged such that an angle of intersection between the first flat yarn and the second flat yarn is 45 degrees or more and 135 degrees or less.

In the adhesive tape according to the third embodiment, it is preferable that there is no other layer on a surface of the base material layer opposite to the adhesive layer. In the adhesive tape according to the third embodiment, when the base material layer satisfies at least one of the above (X) and (Y), the base material layer shrinks not only in one direction but also in multiple directions when the temperature rises due to contact with flames. At this time, since the surface having the adhesive layer and the first film layer (I) is less likely to shrink with respect to the base material layer, the adhesive tape shrinks in a round shape where the surface which does not have the adhesive layer and the first film layer (I) is on the inner side, whereby the adhesive tape moves away from a fire source faster, catching fire is prevented, and the flame retardancy is improved.

As the base material layer, the first film layer (I), and the adhesive layer used in the third embodiment of the present invention, the base material layer, the first film layer (I), and the adhesive layer which are same as those described in the first embodiment are used, and preferred embodiments thereof are also the same. In addition, in the adhesive tape according to the third embodiment, preferred configurations, production methods, or applications other than those described above are the same as the preferred configurations, production methods, or applications of the adhesive tape according to the first embodiment. In the third embodiment, the base material layer and the first film layer (I) correspond to the above support layer.

(Fourth Embodiment)

An adhesive tape according to a fourth embodiment of the present invention will be described. The adhesive tape according to the fourth embodiment is an adhesive tape having a layer structure in which an adhesive layer, a base material layer, and a second film layer (II) are arranged in this order, in which a ratio (a)/(b) of a thickness (a) to a thickness (b) is not less than 1.7 or not more than 0.6 in which the thickness (a) is a thickness from the adhesive layer-side surface of the base material layer to the outer surface of the adhesive layer and the thickness (b) is a thickness from the second film layer (II)-side surface of the base material layer to the outer surface of the second film layer (II), the base material layer satisfies at least one of the following (X) and (Y), and at least one layer constituting the layer structure contain a flame retardant (C).

(X) the base material layer includes at least a first uniaxially oriented film and a second uniaxially oriented film, and the first uniaxially oriented film and the second uniaxially oriented film are arranged such that an angle of intersection between an orientation direction of the first uniaxially oriented film and an orientation direction of the second uniaxially oriented film is 45 degrees or more and 135 degrees or less.

(Y) the base material layer includes at least a first flat yarn and a second flat yarn, and the first flat yarn and the second flat yarn are arranged such that an angle of intersection between the first flat yarn and the second flat yarn is 45 degrees or more and 135 degrees or less.

In the adhesive tape according to the fourth embodiment, it is preferable that there is no other layer between the base material layer and the adhesive layer. In the adhesive tape according to the fourth embodiment, when the base material layer satisfies at least one of the above (X) and (Y), the base material layer shrinks not only in one direction but also in multiple directions when the temperature rises due to contact with flames. At this time, when the ratio (a)/(b) of the thickness (a) from the adhesive layer-side surface of the base material layer to the outer surface of the adhesive layer to the thickness (b) from the second film layer (II)-side surface of the base material layer to the outer surface of the second film layer (II) is not less than 1.7 or not more than 0.6, the flame retardancy of the adhesive tape is improved. Specifically, when the ratio (a)/(b) is not less than 1.7, the surface having the adhesive layer is less likely to shrink with respect to the base material layer. Therefore, when the adhesive tape shrinks in a round shape with the surface having the second film layer (II) on the inner side, the adhesive tape moves away from a fire source faster, catching fire is prevented, and the flame retardancy is improved. In addition, when the ratio (a)/(b) is not more than 0.6, the surface having the second film layer (II) is less likely to shrink with respect to the base material layer. Therefore, the adhesive tape shrinks in a round shape with the surface having the adhesive layer on the inner side, the adhesive tape moves away from a fire source faster, catching fire is prevented, and the flame retardancy is improved.

In the fourth embodiment, when the above ratio (a)/(b) is 1.7 or more, the ratio (a)/(b) is preferably 2.0 or more, more preferably 2.5 or more, and still more preferably 3.0 or more. In addition, when the above ratio (a)/(b) is 0.6 or less, the ratio (a)/(b) is preferably 0.55 or less, more preferably 0.50 or less, and still more preferably 0.40 or less.

For the above ratio (a)/(b), the upper limit is preferably 5.85, and the lower limit is preferably 0.30.

Further, it is preferable that the thickness (a) is larger than the thickness (b) in terms of the balance of the design of the adhesive tape.

As the base material layer, the adhesive layer, and the second film layer (II) used in the fourth embodiment of the present invention, the base material layer, the adhesive layer, and the second film layer (II) which are same as those described in the first embodiment are used, and preferred embodiments thereof are also the same. In addition, in the adhesive tape according to the fourth embodiment, preferred configurations, production methods, or applications other than those described above are the same as the preferred configurations, production methods, or applications of the adhesive tape according to the first embodiment. In the fourth embodiment, the base material layer and the second film layer (II) correspond to the above support layer.

Examples

Hereinafter, although the present invention will be described in more detail with reference to Examples, the present invention is not limited to the following Examples as long as the gist of the present invention is not exceeded. In the examples, "part" and "%" means a ratio on a weight basis.

First, an acrylic resin (A) was prepared as described below, and other raw materials were prepared for preparing an adhesive composition. The weight average molecular weight, the dispersity, and the glass transition temperature of the acrylic resin (A) were measured according to the above methods.

The viscosity was measured according to the the 4.5.3 rotational viscometer method in JIS K5400 (1990).

[Production Example 1]

<Preparation of Acrylic Resin (A-1)>

To a reaction vessel equipped with a thermometer, a stirrer, and a reflux cooler, 51 parts of 2-ethylhexyl acrylate, 40 parts of butyl acrylate, 5 parts of vinyl acetate, 3.9 parts of acrylic acid, 0.1 parts of 2-hydroxyethyl methacrylate, 40 parts of ethyl acetate, and 0.18 parts of azobisisobutyronitrile as a polymerization initiator were charged, the temperature was raised with stirring, and polymerization was carried out at an ethyl acetate reflux temperature for 7 hours. Then, dilution was carried out with ethyl acetate to obtain a 50% solution of an acrylic resin (A-1).

In the obtained acrylic resin (A-1), the weight average molecular weight was 600,000, the dispersity was 5.0, the viscosity was 10,000 mPa·s/25°C, and the glass transition temperature was -59°C.

[Example 1]

To 100 parts of the solid content of the acrylic resin (A-1) prepared in Production Example 1, 5 parts of a melamine resin-coated type ammonium polyphosphate (type II)-based flame retardant (trade name "TERRAJU C-80" manufactured by BUDENHEIM, INC.) as the flame retardant (C), 0.412 parts of an aluminum chelate crosslinking agent (trade name "N-2128" manufactured by Mitsubishi Chemical Corporation) as the crosslinking agent (B), and an appropriate amount of ethyl acetate were added and mixed until being uniform to prepare an adhesive composition. The adhesive composition was applied to a lightly peeled surface of a paper release liner (trade name "SLB-50KWD" manufactured by Sumika-kakoushi Co., Ltd.; basis weight: 53 g/m$^2$) using an applicator such that the thickness after coating was 60 μm, and drying was performed at 80°C for 5 minutes to produce a paper release liner with an adhesive layer having a thickness of 60 μm.

A plain weave cloth (thickness: 40 μm) made of a stretched flat yarn produced by high density polyethylene was used as a base material layer, and low density polyethylene was extruded and laminated on both sides thereof, to prepare an support layer on which the first film layer (I), the base material layer, and the second film layer (II) were arranged in this order. At this time, the thickness of the first film layer (I) was 68 μm, and the thickness of the second film layer (II) was 24 μm. The plain weave cloth made of the flat yarn includes a first flat yarn group and a second flat yarn group, which are arranged such that the angle of intersection between the first flat yarn group and the second flat yarn group intersect is 90 degrees.

The adhesive surface of the paper release liner attached with the adhesive layer was bonded to the surface of the first film layer (I) of the composite sheet (support layer), followed by a heat aging treatment for 7 days in a 40°C dryer to obtain an adhesive tape.

In this adhesive tape, the low density polyethylene film of the base material layer on the adhesive layer side is the first film layer (I), and the low density polyethylene film on the opposite side intermediated by the base material layer is the second film layer (II).

Therefore, the thickness (a) from the surface of the base material layer on the first film layer (I)-side to the outer surface of the adhesive layer is 128 μm, and the thickness (b) from the surface of the base material layer on the second film layer (II)-side to the outer surface of the second film layer (II) is 24 μm, so that the ratio (a)/(b) = 5.3.

[Flammability Test (FAR25)]

Using the adhesive tape obtained above, the flammability test described in 14CFR Part 25 Appendix F Part I Section (a)(1)(ii) Amendment 25-116 was carried out, and in the test items, the combustion time and combustion length were evaluated. Regarding the combustion time, the time from when the fire source was moved away from the test piece to when the fire was extinguished was evaluated. Those which did not extinguish were evaluated as being burned down. Those having a combustion time, namely, being extinguished within 15 seconds were evaluated as passing. For those extinguished immediately after the fire source was moved away, the combustion time was set to 0 seconds.

As for the combustion length, those having a combustion length of 20 cm or less were evaluated as passing. Those which did not extinguish were burned down, and the combustion length was 20 cm or more.

Those evaluated as passing according to the criteria for both combustion time and combustion length were considered as passing in the flammability test.

The results are shown in Table 1.

[Examples 2 to 4]

Adhesive tapes were prepared in the same manner as in Example 1, except that the thicknesses of the first film layers (I), the second film layers (II), and the adhesive layers were changed as shown in Table 1. A flammability test was performed on these adhesive tapes. The results are shown in Table 1.

[Example 5]

To 100 parts of the solid content of the acrylic resin (A-1) prepared in Production Example 1, 5 parts of a halogen-containing positive phosphate ester-based flame retardant (trade name "CR-900" manufactured by DAIHACHI CHEMICAL INDUSTRY CO., LTD.), 0.072 parts of an aluminum chelate crosslinking agent (trade name "N-2128" manufactured by Mitsubishi Chemical Corporation), and an appropriate amount of ethyl acetate were added and mixed until being uniform to prepare an adhesive composition. The adhesive composition was applied to a lightly peeled surface of a paper release liner (trade name "SLB-50KWD" manufactured by Sumika-kakoushi Co., Ltd.; basis weight: 53 g/m$^2$) using an applicator such that the thickness after coating was 45 μm, and drying was performed at 80°C for 5 minutes to produce a paper release liner with an adhesive layer having a thickness of 45 μm.

A plain weave cloth (thickness: 40 μm) made of a stretched flat yarn produced by high density polyethylene was used as a base material layer, and low density polyethylene was extruded and laminated on one side thereof, to prepare an support layer on which the base material layer and the second film layer (II) were arranged in this order. The thickness of the second film layer (II) was 20 μm. The plain weave cloth made of the flat yarn includes a first flat yarn group and a second flat yarn group, which are arranged such that the angle of intersection between the first flat yarn group and the second flat yarn group intersect is 90 degrees.

The adhesive surface of the paper release liner with the adhesive layer was bonded to the surface of the base material layer of the composite sheet (support layer), followed by a heat aging treatment for 7 days in a 40°C dryer to obtain an adhesive tape.

In the above adhesive tape, the thickness (a) from the surface of the base material layer to the outer surface of the adhesive layer is 45 μm, and the thickness (b) from the surface of the base material layer on the second film layer (II)-side to the outer surface of the second film layer (II) is 20 μm, so that the ratio (a)/(b) = 2.3. A flammability test was performed on this adhesive tape. The results are shown in Table 1.

[Comparative Examples 1 and 2]

Adhesive tapes were prepared in the same manner as in Example 1, except that the thicknesses of the first film layers (I), the second film layers (II), and the adhesive layers were changed as shown in Table 1. A flammability test was performed on these adhesive tapes. The results are shown in Table 1.

[Comparative Example 3]

An adhesive tape was prepared in the same manner as in Example 1, except that the base material layer was one layer of a biaxially stretched PET film, and the thicknesses of the first film layer (I), the second film layer (II), and the adhesive layer were changed as shown in Table 1. A flammability test was performed on this adhesive tape. The results are shown in Table 1.

[Comparative Examples 4 and 5]

Adhesive tapes were prepared in the same manner as in Example 1, except that the adhesive layers did not contain the flame retardant (C), and the thicknesses of the first film layers (I), the second film layers (II), and the adhesive layers were changed as shown in Table 1. A flammability test was performed on these adhesive tapes. The results are shown in Table 1.

[Table 1]

| | Base material layer | Thickness (μm) | | | | (a)/(b) | Flame retardant (part)/ adhesive | Flame retardant (part)/tape | Flammability test (determination based on FAR criteria) | | | | |
| | | First film layer | Adhesive layer | (a) | (b) second film layer | | | | Combustion time (s) extinguished within 15 seconds | | Combustion length (cm) 20 cm or less | | Passed or failed |
|---|---|---|---|---|---|---|---|---|---|---|---|---|---|
| Example 1 | FY | 68 | 60 | 128 | 24 | 5.3 | 5 | 1.8 | 0 | Passed | 15.1 | Passed | Passed |
| Example 2 | FY | 105 | 50 | 155 | 40 | 3.9 | 5 | 1.3 | 0 | Passed | 13.4 | Passed | Passed |
| Example 3 | FY | 40 | 75 | 115 | 40 | 2.9 | 5 | 2.2 | 0 | Passed | 13.8 | Passed | Passed |
| Example 4 | FY | 40 | 50 | 90 | 40 | 2.3 | 5 | 1.7 | 0 | Passed | 14.3 | Passed | Passed |
| Example 5 | FY | - | 45 | 45 | 20 | 2.3 | 5 | 2.4 | 0 | Passed | 16.8 | Passed | Passed |
| Comparative Example 1 | FY | 24 | 60 | 84 | 68 | 1.2 | 5 | 1.8 | burned down | Failed | burned down(> 20) | Failed | Failed |
| Comparative Example 2 | FY | 40 | 25 | 65 | 40 | 1.6 | 5 | 1.1 | burned down | Failed | burned down(> 20) | Failed | Failed |
| Comparative Example 3 | PET film | 50 | 75 | 125 | 50 | 2.5 | 5 | 1.4 | burned down | Failed | burned down(> 20) | Failed | Failed |
| Comparative Example 4 | FY | 40 | 85 | 125 | 70 | 1.8 | 0 | 0 | burned down | Failed | burned down(> 20) | Failed | Failed |
| Comparative Example 5 | FY | 40 | 135 | 175 | 70 | 2.5 | 0 | 0 | 28.8 | Failed | 16.5 | Passed | Failed |
| FY: plain weave cloth made of flat yarn | | | | | | | | | | | | | |

As seen from the determination results shown in Table 1, in adhesive tapes in Examples in which the ratio (a)/(b) of the total thickness (a) of the first film layer (I) and the adhesive layer to the thickness (b) of the second film layer (II) is 1.7 or more, the combustion time and the combustion length in the flammability test described in 14CFR Part 25 Appendix F Part I Section (a)(1)(ii) were within the criteria and passed the criteria, so that the adhesive tapes have excellent flame retardancy. In addition, the adhesive tapes in Examples have good flame retardancy even when the content of the flame retardant in the adhesive layer is 5 parts, which is a content smaller than that of the related art.

On the other hand, it can be seen that in adhesive tapes in Comparative Examples 1 and 2 in which the ratio (a)/(b) is less than 1.7 and more than 0.6, the combustion time and the combustion length in the flammability test described in 14CFR Part 25 Appendix F Part I Section (a)(1)(ii) Amendment 25-116 are beyond the criteria and failed, so that the flame retardancy is poor. In addition, it can be seen that Comparative Example 3 in which an one film layer of biaxially stretched PET is used as the base material layer is also poor in flame retardancy. Further, it can be seen that in Comparative Examples 4 and 5 which do not contain a flame retardant even when the ratio (a)/(b) is 1.7 or more, both or one of the combustion time and the combustion length are beyond the criteria and failed, so that the flame retardancy is poor.

Although the present invention has been described in detail with reference to specific embodiments, it will be apparent to those skilled in the art that various changes and modifications can be made without departing from the spirit and scope of the present invention. The present application is based on the Japanese patent application (Japanese Patent Application No. 2020-055205) filed on March 25, 2020, and the contents of which are incorporated herein by reference.

INDUSTRIAL APPLICABILITY

The adhesive tape of the present invention is excellent in both flame retardancy and adhesiveness, and has a good balance therebetween, and is thus suitable for applications for temporarily or permanently fixing an aircraft member. For example, the adhesive tape of the present invention can be used for applications for temporarily or permanently fixing an interior material or furniture in an aircraft cabin. Specifically, the adhesive tape of the present invention can be suitably used in applications for permanently fixing a mirror or a guidance sign or applications for temporarily fixing a decorative panel or an overhead compartment in an aircraft cabin.

**Claims**

1. An adhesive tape comprising a layer structure in which an adhesive layer, a first film layer (I), a base material layer, and a second film layer (II) are arranged in this order,

   wherein the base material layer satisfies at least one of the following (X) and (Y):

   (X) the base material layer comprises at least a first uniaxially oriented film and a second uniaxially oriented film, and the first uniaxially oriented film and the second uniaxially oriented film are arranged such that an angle of intersection between an orientation direction of the first uniaxially oriented film and an orientation direction of the second uniaxially oriented film is 45 degrees or more and 135 degrees or less, and
   (Y) the base material layer comprises at least a first flat yarn and a second flat yarn, and the first flat yarn and the second flat yarn are arranged such that an angle of intersection between the first flat yarn and the second flat yarn is 45 degrees or more and 135 degrees or less,

   a ratio (a)/(b) of a thickness (a) to a thickness (b) is not less than 1.7 or not more than 0.6 in which the thickness (a) is a thickness from the first film layer (I)-side surface of the base material layer to the outer surface of the adhesive layer and the thickness (b) is a thickness from the second film layer (II)-side surface of the base material layer to the outer surface of the second film layer (II), and
   at least one layer constituting the layer structure comprises a flame retardant (C).

2. The adhesive tape according to claim 1, wherein the first film layer (I) has a thickness of 30 $\mu$m or more.

3. The adhesive tape according to claim 1 or 2, wherein the thickness of the first film layer (I) is larger than a thickness of the second film layer (II).

4. The adhesive tape according to any one of claims 1 to 3, wherein the adhesive layer comprises an adhesive composition containing an acrylic resin (A).

5. The adhesive tape according to claim 4, wherein the adhesive composition further comprises a crosslinking agent (B).

6. The adhesive tape according to claim 4 or 5, wherein the adhesive layer comprises the flame retardant (C), and a content of the flame retardant (C) in the adhesive layer is 1 to 25 parts by weight with respect to 100 parts by weight of the acrylic resin (A).

7. The adhesive tape according to any one of claims 1 to 6, which is used for fixing an aircraft member.

8. An adhesive tape comprising an adhesive layer and a base material layer,

   wherein the base material layer satisfies at least one of the following (X) and (Y):

   (X) the base material layer comprises at least a first uniaxially oriented film and a second uniaxially oriented film, and the first uniaxially oriented film and the second uniaxially oriented film are arranged such that an angle of intersection between an orientation direction of the first uniaxially oriented film and an orientation direction of the second uniaxially oriented film is 45 degrees or more and 135 degrees or less, and
   (Y) the base material layer comprises at least a first flat yarn and a second flat yarn, and the first flat yarn and the second flat yarn are arranged such that an angle of intersection between the first flat yarn and the second flat yarn is 45 degrees or more and 135 degrees or less, and

   at least one of the adhesive layer and the base material layer comprises a flame retardant (C).

9. An adhesive tape comprising a layer structure in which an adhesive layer, a first film layer (I), and a base material layer are arranged in this order,

   wherein the base material layer satisfies at least one of the following (X) and (Y):

   (X) the base material layer comprises at least a first uniaxially oriented film and a second uniaxially oriented film, and the first uniaxially oriented film and the second uniaxially oriented film are arranged such that an angle of intersection between an orientation direction of the first uniaxially oriented film and an orientation direction of the second uniaxially oriented film is 45 degrees or more and 135 degrees or less, and
   (Y) the base material layer comprises at least a first flat yarn and a second flat yarn, and the first flat yarn and the second flat yarn are arranged such that an angle of intersection between the first flat yarn and the second flat yarn is 45 degrees or more and 135 degrees or less, and

   at least one layer constituting the layer structure comprises a flame retardant (C).

10. An adhesive tape comprising a layer structure in which an adhesive layer, a base material layer, and a second film layer (II) are arranged in this order,

    wherein a ratio (a)/(b) of a thickness (a) to a thickness (b) is not less than 1.7 or not more than 0.6 in which the thickness (a) is a thickness from the adhesive layer-side surface of the base material layer to the outer surface of the adhesive layer and the thickness (b) is a thickness from the second film layer (II)-side surface of the base material layer to the outer surface of the second film layer (II),
    the base material layer satisfies at least one of the following (X) and (Y), and
    at least one layer constituting the layer structure comprises a flame retardant (C),

    (X) the base material layer comprises at least a first uniaxially oriented film and a second uniaxially oriented film, and the first uniaxially oriented film and the second uniaxially oriented film are arranged such that an angle of intersection between an orientation direction of the first uniaxially oriented film and an orientation direction of the second uniaxially oriented film is 45 degrees or more and 135 degrees or less, and
    (Y) the base material layer comprises at least a first flat yarn and a second flat yarn, and the first flat yarn and the second flat yarn are arranged such that an angle of intersection between the first flat yarn and the second flat yarn is 45 degrees or more and 135 degrees or less.

## INTERNATIONAL SEARCH REPORT

| | International application No. |
|---|---|
| | PCT/JP2021/012431 |

| A. CLASSIFICATION OF SUBJECT MATTER |
|---|
| B32B 27/00(2006.01)i; C09J 133/00(2006.01)i; C09J 7/29(2018.01)i; C09J 7/38(2018.01)i<br>FI: C09J7/38; C09J7/29; C09J133/00; B32B27/00 M |
| According to International Patent Classification (IPC) or to both national classification and IPC |

| B. FIELDS SEARCHED |
|---|
| Minimum documentation searched (classification system followed by classification symbols)<br>B32B27/00; C09J133/00; C09J7/29; C09J7/38 |
| Documentation searched other than minimum documentation to the extent that such documents are included in the fields searched<br>    Published examined utility model applications of Japan      1922–1996<br>    Published unexamined utility model applications of Japan   1971–2021<br>    Registered utility model specifications of Japan       1996–2021<br>    Published registered utility model applications of Japan   1994–2021 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| X | JP 2002-138263 A (EXCEL TRADING KK) 14 May 2002 (2002-05-14) claims, examples | 8–9 |
| A | claims, examples | 1–7, 10 |
| X | JP 2002-371250 A (HAGIHARA INDUSTRIES INC.) 26 December 2002 (2002-12-26) claims, examples | 8–9 |
| A | claims, examples | 1–7, 10 |
| X | WO 2015/098983 A1 (THE NIPPON SYNTHETIC CHEMICAL INDUSTRY CO., LTD.) 02 July 2015 (2015-07-02) claims, paragraph [0015], examples | 8–9 |
| A | claims, paragraph [0015], examples | 1–7, 10 |
| X | WO 2018/117264 A1 (MITSUBISHI CHEMICAL CORPORATION) 28 June 2018 (2018-06-28) claims, paragraph [0015], examples | 8–9 |
| A | claims, paragraph [0015], examples | 1–7, 10 |
| P, X | JP 2020-193331 A (DIATEX CO., LTD.) 03 December 2020 (2020-12-03) claims, paragraphs [0049], [0060], examples, fig. 1 | 1–2, 4–5, 7–9 |
| P, A | claims, paragraphs [0049], [0060], examples, fig. 1 | 3, 6, 10 |

| ☐ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    03 June 2021 (03.06.2021) | Date of mailing of the international search report<br>    15 June 2021 (15.06.2021) |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**INTERNATIONAL SEARCH REPORT**
Information on patent family members

International application no.

PCT/JP2021/012431

| Patent Documents referred in the Report | Publication Date | Patent Family | Publication Date |
|---|---|---|---|
| JP 2002-138263 A | 14 May 2002 | (Family: none) | |
| JP 2002-371250 A | 26 Dec. 2002 | (Family: none) | |
| WO 2015/098983 A1 | 02 Jul. 2015 | US 2016/0326401 A1 claims, paragraph [0020], examples EP 3088301 A1 CN 105849000 A TW 201529798 A | |
| WO 2018/117264 A1 | 28 Jun. 2018 | US 2019/0316010 A1 claims, paragraph [0024], examples EP 3561011 A1 | |
| JP 2020-193331 A | 03 Dec. 2020 | (Family: none) | |

Form PCT/ISA/210 (patent family annex) (January 2015)

**EP 4 129 652 A1**

**REFERENCES CITED IN THE DESCRIPTION**

**Patent documents cited in the description**

- JP H11323269 A
- JP 2008024827 A
- WO 2018117264 A
- JP 2020055205 A

24